# EUROPEAN PATENT SPECIFICATION

(11) **EP 4 509 341 B1**
(45) Date of publication and mention of the grant of the patent: **03.12.2025**
(21) Application number: 23191532.3
(22) Date of filing: 15.08.2023
(51) Int. Cl.: B60K 11/08

(54) **GRILLE SHUTTER ASSEMBLY**
GITTERVERSCHLUSSANORDNUNG
ENSEMBLE OBTURATEUR DE GRILLE

(43) Date of publication of application: 19.02.2025
(73) Proprietor: Motherson Innovations Company Limited, London EC2N 2AX (GB)
(72) Inventor: WAHL, Marcel, 79268 Bötzingen (DE)
(74) Representative: Westphal, Mussgnug & Partner Patentanwälte mbB

(56) References cited:
- WO-A1-2014/150143
- DE-A1- 102021 127 798
- DE-B3- 102021 133 573
- US-A1- 2017 248 066

## Description

The present invention relates to a grille shutter assembly.

WO 2014 150143 A1 discloses a grille assembly for a vehicle which includes a grille frame and a plurality of lamellas. The grille frame includes an opening and the plurality of lamellas is mounted directly to the grille frame and extends across at least a portion of the opening. The lamellas are movable relative to the grille frame between an open position in which air is allowed to flow through the opening and a closed position in which airflow through the opening is restricted.

Known lamellas comprise two pins being arranged on opposite ends of the lamellas and extending in opposite directions to engage in holes arranged on two opposite sides of the grille frame. To mount the lamella in the grille frame, in these cases the lamella has to be bent which might lead in deformation or damage of the lamella.

It is one task of the present invention to provide a grille shutter assembly, especially for a vehicle, the lamellas of which can easily be mounted or changed in case of defect.

The task is solved by a grille shutter assembly comprising the features specified in claim 1.

Advantageous embodiments are the subject of the dependent claims.

According to an embodiment of the present invention, a grille shutter assembly, especially for use in a vehicle, comprises a grille frame with an opening and at least one lamella extending across at least a portion of the opening, the lamella being movably mounted relative to the opening of the grille frame between an open position and a closed position, the lamella comprising a first end and a second end, wherein a mounting pin is arranged at the first end and a C-shaped arm is arranged at the second end, and wherein the mounting pin is removably attached to the grille frame on a first side of the grille frame and the C-shaped arm is removably attached by means of a coupling link to the grille frame on a second side of the grille frame, the first side and the second side being two opposite sides of the grille frame.

In the open position air is allowed to flow through the opening and in the closed position airflow through the opening is restricted.

The C-shaped arm of the lamella allows mounting the lamella onto the frame without the use of any additional parts. Especially, the C-shaped arm allows mounting the lamella onto the frame without to deform the lamella.

According to an embodiment of the invention the grille shutter assembly comprises a plurality of lamellas. When using a plurality of lamellas, each of the lamella might have a smaller surface and therefore the forces, for example of the airflow, acting on each of the lamellas are smaller.

According to a further embodiment of the invention the plurality of lamellas is coupled by a coupling bar for simultaneously moving the lamellas. Use of such a coupling bar facilitates moving the lamellas.

According to a further embodiment of the invention the mounting pin is placed in a hole arranged in the first side of the grille frame. Placing a pin in a hole enables easy mounting of the lamella.

According to a preferred embodiment of the invention the coupling link comprises a receptacle opening and a protrusion being formed to be placed in the receptacle opening. Such kind of coupling link enables easy mounting of the lamella.

According to a further embodiment of the invention the protrusion is of cylindrical shape or of spherical shape or mushroom-shaped. A protrusion of cylindrical shape enables good guidance of the lamella. A protrusion of spherical shape or mushroom-shaped enables good tolerance compensation.

According to a further embodiment of the invention the receptacle opening is arranged on the C-shaped arm and the protrusion is arranged on the second side of the grille frame.

According to a further preferred embodiment of the invention the protrusion is arranged on a side of the second side facing away from the opening of the grille frame. Especially in combination with the C-shaped arm this arrangement of the protrusion allows easy mounting of the lamella without bending of the lamella by moving the lamella sideways in the opening until the mounting pin is located above the hole of the first side of the grille frame and the C-shaped arm encompasses the second side of the grille frame and afterwards lowering the lamella until the mounting pin is placed in the hole and the protrusion engages in the receptacle opening.

The pin which is placed in the hole and the protrusion which is arranged within the receptacle allow a mounting of the lamella such that the lamella can rotate around the axis of the pin and the protrusion.

According to a further preferred embodiment of the invention the coupling link comprises a locking assembly. Such locking assembly prevents the lamella from inadvertently being removed from the frame.

According to an embodiment of the invention the locking assembly comprises a locking projection, the locking projection being arranged either in the receptacle opening or on the protrusion. A locking projection is easy to manufacture and can provide secure fixation.

According to an embodiment of the invention the locking assembly comprises a snap-in hole, the snap-in hole being arranged either at or in the receptacle opening or in the protrusion. A snap-in hole is easy to manufacture and can provide secure fixation.

The present invention is described in detail with reference to the drawings attached wherein
- Figure 1: is a perspective view of a grille shutter assembly according to an embodiment of the present invention,
- Figure 2: is an exploded view of the grille shutter assembly according to fig. 1,
- Figure 3: is an enlarged view of a lamella of the grille shutter assembly according to fig. 1,
- Figure 4: is a cross sectional view of a first embodiment of a coupling link of the lamella according to fig. 3,
- Figure 5a: is a first view of the process of mounting the lamella in the grille frame of the grille shutter assembly according to fig. 1, in which the lamella is moved sideways towards the grille frame,
- Figure 5b: is a second view of the process of mounting the lamella in the grille frame of the grille shutter assembly according to fig. 1, in which the lamella reached a position within the grille frame,
- Figure 5c: is a third view of the process of mounting the lamella in the grille frame of the grille shutter assembly according to fig. 1, in which the lamella was lowered and is finally mounted in the grille frame,
- Figure 6: is a cross sectional view of a second embodiment of a coupling link for the lamella according to fig. 3,
- Figure 7: is an exploded view of a lamella comprising the coupling link according to fig. 6,
- Figure 8: is a cross sectional view of a third embodiment of a coupling link for the lamella according to fig. 3,
- Figure 9: is an exploded view of a lamella comprising the coupling link according to fig. 8,
- Figure 10: is a cross sectional view of a fourth embodiment of a coupling link for the lamella according to fig. 3, and
- Figure 11: is a perspective view of a lamella comprising the coupling link according to fig. 10.

The figures show different views of different components and embodiments of the present invention. Identical or similar parts are labelled with identical reference numbers in all figures. For clarity reasons not all reference numbers are included in all figures.

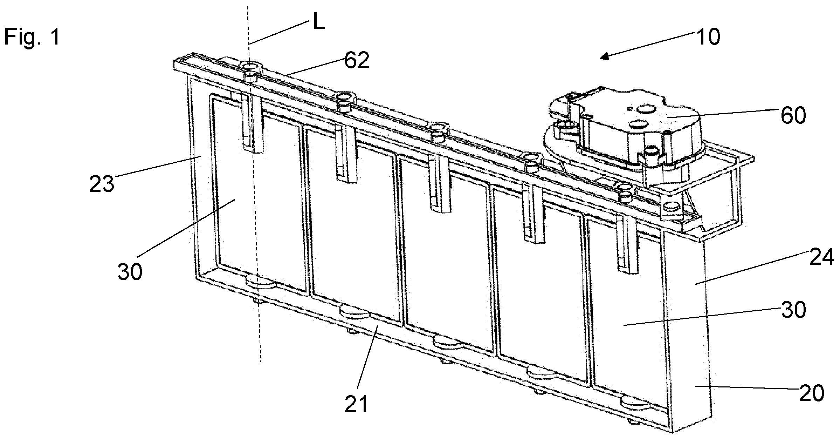

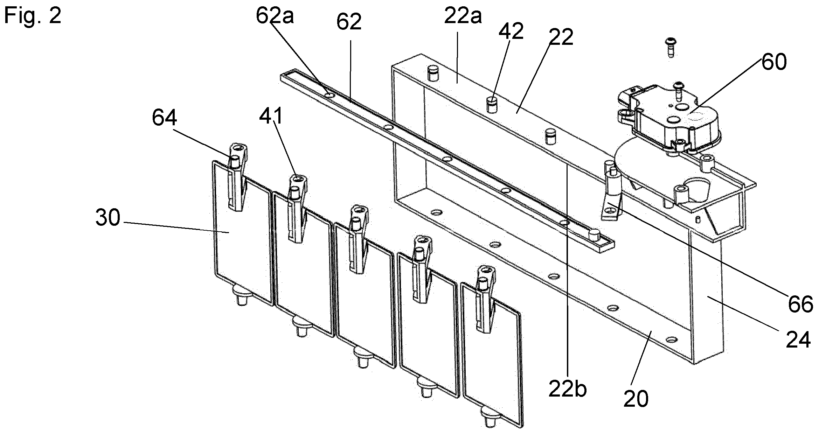

Figures 1 and 2 illustrate an embodiment of a grille shutter assembly 10 comprising a grille frame 20 with an opening 25 and at least one lamella 30 extending across at least a portion of the opening 25. The grille frame 20 comprises a first side 21 and a second side 22, the first side 21 and the second side 22 being two opposite sides of the grille frame 20. Further, the grille frame 20 comprises a third side 23 and a fourth side 24, the third side 23 and the fourth side 24 each connecting the first side 21 and the second side 22 and further being as well two opposite sides of the grille frame 20. Especially, the grille frame 20 can have a rectangular appearance. The second side 22 has a side 22a facing away from the opening 25 and a side 22b facing towards the opening. Same applies for the first side 21, the third side 23 and the fourth side 24.

The lamella 30 is movably mounted relative to the opening 25 of the grille frame 20 between an open position, in which air is allowed to flow through the opening 25, and a closed position, in which airflow through the opening 25 is restricted (see fig. 1). To move between the open position and the closed position, the lamella 30 can turn around a longitudinal axis **L.**

The lamella 30 comprises a first end 31 and a second end 32. The lamella 30 may be of rectangular shape to optimally cover the rectangular opening 25. In an embodiment, the grille shutter assembly may comprise a plurality of lamellas 30, the lamellas especially being arranged parallel to each other with their longitudinal axis L spaced apart. In a preferred embodiment, the lamellas 30 are arranged such that the opening 25 is covered to the largest possible extent when the lamellas 30 are in their closed position.

The plurality of lamellas 30 may be coupled by a coupling bar 62 for simultaneously moving the lamellas 30. For coupling the coupling bar 62 to the lamellas 30, a coupling pin 64 may be attached on top of the C-shaped arm 34 which engages in a hole 62a of the coupling bar 62. An actuator 60 may be attached to the grille frame 20, the actuator 60 being connected to the coupling bar 62 by means of a transmission 66 to move the coupling bar 62 and thereby moving the lamellas 30 from the open position to the closed position or vice versa.

A mounting pin 33 is arranged at the first end 31 of the lamella 30, and a C-shaped arm 34 is arranged at the second end 32 of the lamella. The mounting pin 33 is removably attached to the grille frame 20 on the first side 21 of the grille frame 20. For example, the mounting pin 33 may be placed in a hole 26 arranged in the first side 21 of the grille frame 20.

The C-shaped arm is removably attached by means of a coupling link 40 to the grille frame 20 on the second side 22 of the grille frame 20. In an embodiment, the coupling link 40 comprises a receptacle opening 41 and a protrusion 42 being formed to be placed in the receptacle opening 41. The receptacle opening 41 may be arranged on the C-shaped arm 34, and the protrusion 42 may be arranged on the second side 22 of the grille frame 20, preferably on the side 22a of the second side 22 facing away of the opening 25.

In an embodiment, the coupling link 40 may comprise a locking assembly 50. The locking assembly 50 may comprise a locking projection 51, the locking projection 51 being arranged either in the receptacle opening 41 or on the protrusion 42. The locking assembly 50 may in addition or alternatively comprise a snap-in hole 52, the snap-in hole 52 being arranged either at or in the receptacle opening 41 or in the protrusion 42.

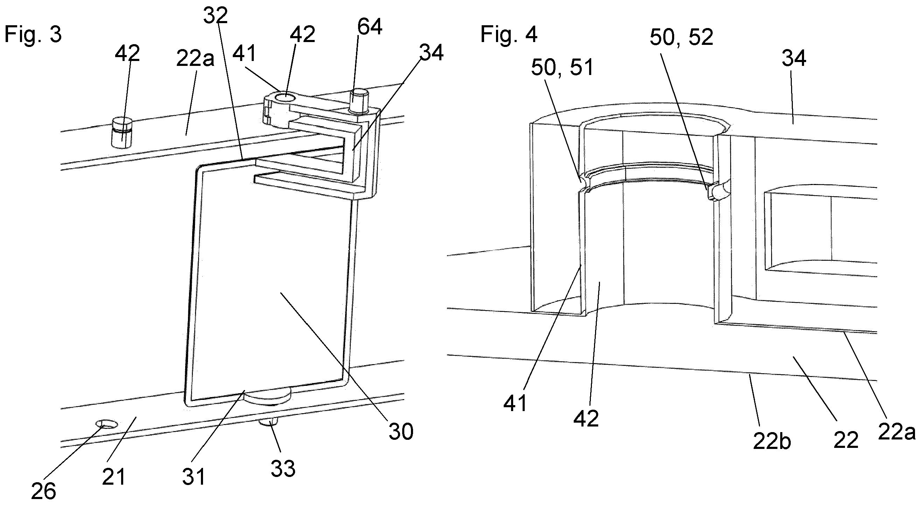

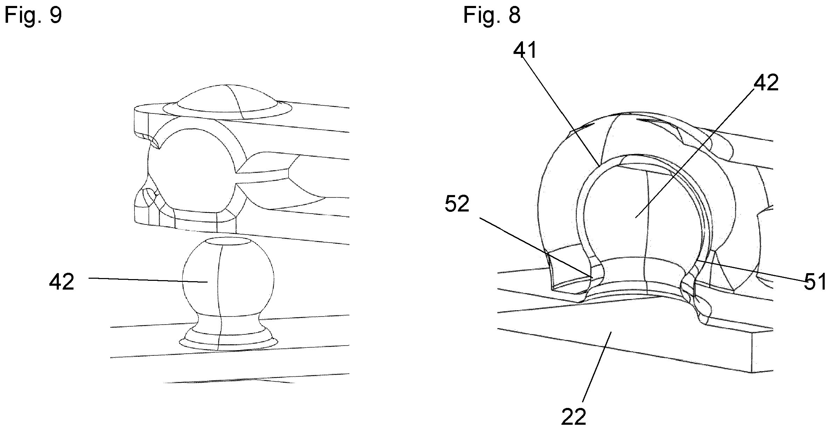

Different embodiments of the coupling link 40 are illustrated in figures 3 and 4 (first embodiment), 6 and 7 (second embodiment), 8 and 9 (third embodiment), or 10 and 11 (fourth embodiment). The protrusion 42 may be of cylindrical shape (see figures 3 and 4, 6 and 7, or 10 and 11) or of spherical shape (see figures 8 and 9).

In the first embodiment of the coupling link 40 (see figures 3 and 4), the protrusion 42 may be of cylindrical shape. Respectively, the receptacle opening 41 may be of cylindrical shape. The receptacle opening 41 may comprise a locking projection 51, for example in the form of a circumferential rim. The protrusion 42 may comprise a snap-in-hole 52, for example in the form of a circumferential channel.

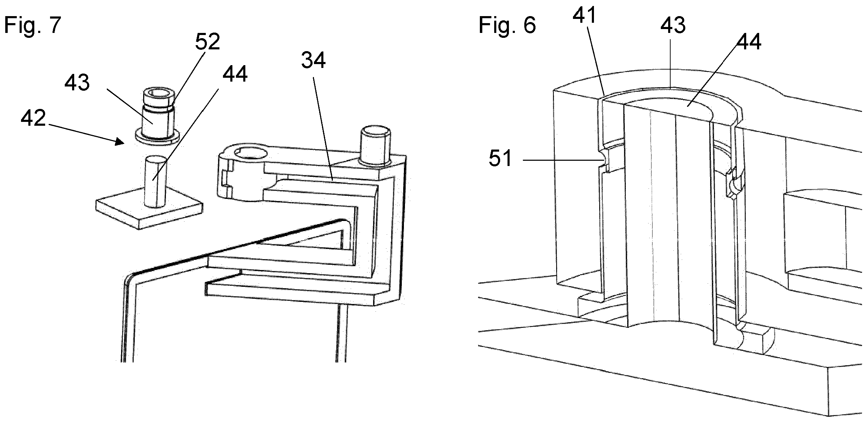

In the second embodiment of the coupling link 40 (see figures 6 and 7), the protrusion 42 of this coupling link 40 differs from the protrusion 42 of the first embodiment in that a bushing 43 is arranged on a pin 44, the pin being attached to the side 22a facing away from the opening 25 of the second side 22 of the grille frame 20. The snap-in-hole 52 in this case is arranged at the bushing 43.

In the third embodiment of the coupling link 40 (see figures 8 and 9), the protrusion 42 may be of spherical shape. Respectively, the receptacle opening 41 may be of spherical shape or mushroom-shaped. The protrusion 42 in this case itself may form the locking projection 51. The receptacle opening 41 in this case itself may form the snap-in-hole 52.

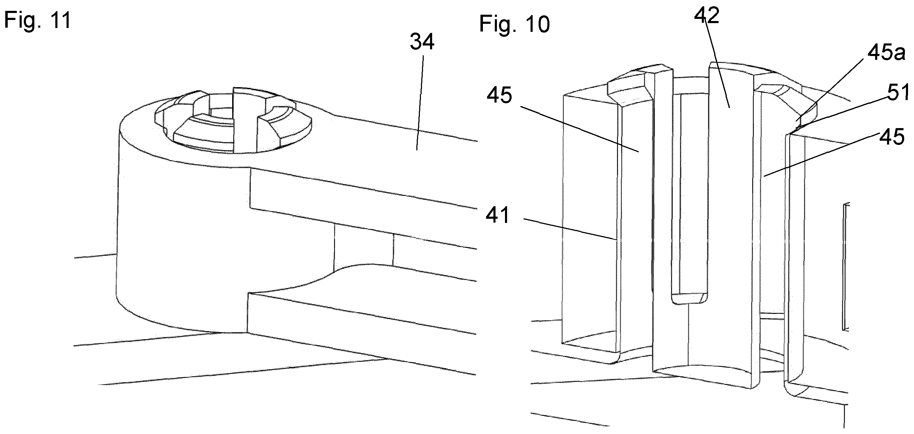

In the fourth embodiment of the coupling link 40 (see figures 10 and 11), the protrusion 42 may comprise several, for example four, longitudinal ribs 45. The receptacle opening 41 may be of cylindrical shape. The protrusion 42 may comprise a locking projection 51, for example in the form of an outward extending projection 45a at the free end of each of the ribs 45. The protrusion 42 may have a longer length than the receptacle opening 41, which might be a through-hole, and a snap-in connection may be provided when the outward extending projections 42 protrude from the receptacle opening 41.

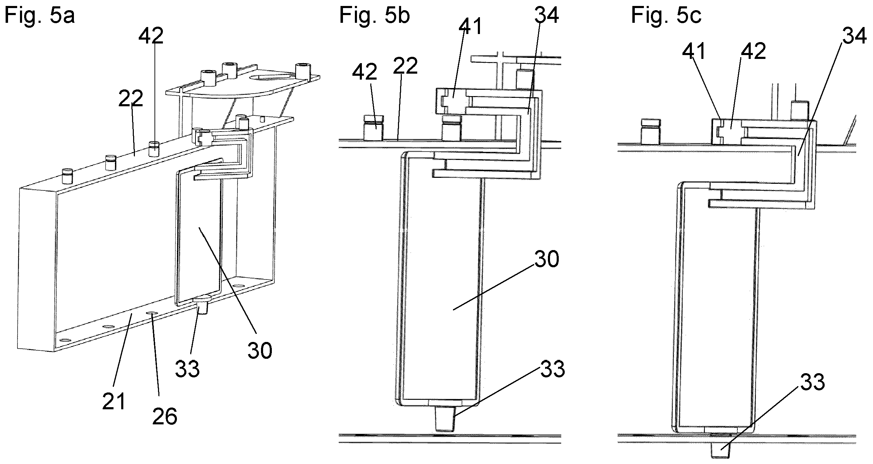

For mounting the lamella 30 in the grille frame 20 the lamella can be moved sideways in the opening 25 of the grille frame 20 (see fig. 5a) until the mounting pin 33 is located above the hole 26 of the first side 21 of the grille frame 20 and the C-shaped arm 34 encompasses the second side 22 of the grille frame 20 (see fig. 5b). Afterwards the lamella 30 can be lowered until the mounting pin 33 is placed in the hole 26 and the protrusion 42 of the second side 22 of the grille frame 20 engages in the receptacle opening 41 of the C-shaped arm 34 (see fig. 5c). In this position the locking assembly 50 engages to prevent the lamella 30 from being removed inadvertently. The C-shaped arm 34 of the lamella 30 therefore allows easy mounting of the lamella 30 without bending of the lamella 30.

### List of reference numbers

- 10: grille frame assembly
- 20: grille frame
- 21: first side
- 22: second side
- 22a: side facing away from the opening
- 22b: side facing towards the opening
- 23: third side
- 24: fourth side
- 25: opening
- 30: lamella
- 31: first end
- 32: second end
- 33: mounting pin
- 34: C-shaped arm
- 40: coupling link
- 41: receptacle opening
- 42: protrusion
- 43: bushing
- 44: pin
- 45: rib
- 45a: projection
- 50: locking assembly
- 51: locking projection
- 52: snap-in hole
- 60: actuator
- 62: coupling bar
- 62a: hole
- 64: coupling pin
- 66: transmission
- L: longitudinal axis

## Claims

1. Grille shutter assembly (10) comprising a grille frame with (20) an opening (25) and at least one lamella (30) extending across at least a portion of the opening (25), the lamella (30) being movably mounted relative to the opening (25) of the grille frame (20) between an open position and a closed position, the lamella (30) comprising a first end (31) and a second end (32), mounting pin (33) is arranged at the first end (31), **characterized in that** a C-shaped arm (34) is arranged at the second end (32), and that the mounting pin (33) is removably attached to the grille frame (20) on a first side (21) of the grille frame (20) and the C-shaped arm (34) is removably attached by means of a coupling link (40) to the grille frame (20) on a second side (22) of the grille frame (20), the first side (21) and the second side (22) being two opposite sides of the grille frame (20).

2. Grille shutter assembly according to claim 1, wherein the grille shutter assembly (10) comprises a plurality of lamellas (30).

3. Grille shutter assembly according to claim 2, wherein the plurality of lamellas (30) is coupled by a coupling bar (62) for simultaneously moving the lamellas (30).

4. Grille shutter assembly according to one of the preceding claims, wherein the mounting pin (33) is placed in a hole (26) arranged in the first side (21) of the grille frame (20).

5. Grille shutter assembly according to one of the preceding claims, wherein the coupling link (40) comprises a receptacle opening (41) and a protrusion (42) being formed to be placed in the receptacle opening (41).

6. Grille shutter assembly according to claim 5, wherein the protrusion (42) is of cylindrical shape or of spherical shape or mushroom-shaped.

7. Grille shutter assembly according to claim 5 or 6, wherein the receptacle opening (41) is arranged on the C-shaped arm (34) and the protrusion (42) is arranged on the second side (22) of the grille frame (20).

8. Grille shutter assembly according to claim 7, wherein the protrusion (42) is arranged on a side (22a) of the second side (22) facing away from the opening (25) of the grille frame (20).

9. Grille shutter assembly according to one of the preceding claims, wherein the coupling link (40) comprises a locking assembly (50).

10. Grille shutter assembly according to claim 9, wherein the locking assembly (50) comprises a locking projection (51), the locking projection (51) being arranged either in the receptacle opening (41) or on the protrusion (42).

11. Grille shutter assembly according to claim 9 or 10, wherein the locking assembly (50) comprises a snap-in hole (52), the snap-in hole (52) being arranged either at or in the receptacle opening (41) or in the protrusion (42).

## Patentansprüche

1. Gitterverschlussanordnung (10), die einen Gitterrahmen (20) mit einer Öffnung (25) und zumindest eine Lamelle (30), die sich über zumindest einen Abschnitt der Öffnung (25) erstreckt, aufweist, wobei die Lamelle (30) relativ zu der Öffnung (25) des Gitterrahmens (20) zwischen einer offenen Position und einer geschlossenen Position beweglich montiert ist, wobei die Lamelle (30) ein erstes Ende (31) und ein zweites Ende (32) aufweist, wobei an dem ersten Ende (31) ein Befestigungsstift (33) angeordnet ist, **dadurch gekennzeichnet, dass** an dem zweiten Ende (32) ein C-förmiger Arm (34) angeordnet ist und dass der Befestigungsstift (33) auf einer ersten Seite (21) des Gitterrahmens (20) lösbar an dem Gitterrahmen (20) angebracht ist und der C-förmige Arm (34) mittels einer Kopplungsverbindung (40) auf einer zweiten Seite (22) des Gitterrahmens (20) lösbar an dem Gitterrahmen (20) angebracht ist, wobei die erste Seite (21) und die zweite Seite (22) zwei entgegengesetzte Seiten des Gitterrahmens (20) sind.

2. Gitterverschlussanordnung nach Anspruch 1, wobei die Gitterverschlussanordnung (10) mehrere Lamellen (30) aufweist.

3. Gitterverschlussanordnung nach Anspruch 2, wobei die mehreren Lamellen (30) durch eine Kopplungsstange (62) gekoppelt sind, um die Lamellen (30) gleichzeitig zu bewegen.

4. Gitterverschlussanordnung nach einem der vorstehenden Ansprüche, wobei der Befestigungsstift (33) in einem Loch (26), das in der ersten Seite (21) des Gitterrahmens (20) vorgesehen ist, angeordnet ist.

5. Gitterverschlussanordnung nach einem der vorstehenden Ansprüche, wobei die Kopplungsverbindung (40) eine Aufnahmeöffnung (41) und einen Vorsprung (42), der so gebildet ist, dass er in die Aufnahmeöffnung (41) eingesetzt werden kann, aufweist.

6. Gitterverschlussanordnung nach Anspruch 5, wobei der Vorsprung (42) eine zylindrische Form oder eine kugelförmige Form aufweist oder pilzförmig ist.

7. Gitterverschlussanordnung nach Anspruch 5 oder 6, wobei die Aufnahmeöffnung (41) an dem C-förmigen Arm (34) angeordnet ist und der Vorsprung (42) auf der zweiten Seite (22) des Gitterrahmens (20) angeordnet ist.

8. Gitterverschlussanordnung nach Anspruch 7, wobei der Vorsprung (42) an einer Seite (22a) der zweiten Seite (22), die der Öffnung (25) des Gitterrahmens (20) abgewandt ist, angeordnet ist.

9. Gitterverschlussanordnung nach einem der vorstehenden Ansprüche, wobei die Kopplungsverbindung (40) eine Verriegelungsanordnung (50) aufweist.

10. Gitterverschlussanordnung nach Anspruch 9, wobei die Verriegelungsanordnung (50) einen Verriegelungsvorsprung (51) aufweist, wobei der Verriegelungsvorsprung (51) entweder in der Aufnahmeöffnung (41) oder an dem Vorsprung (42) angeordnet ist.

11. Gitterverschlussanordnung nach Anspruch 9 oder 10, wobei die Verriegelungsanordnung (50) ein Einrastloch (52) aufweist, wobei das Einrastloch (52) entweder an oder in der Öffnung (41) oder in dem Vorsprung (42) angeordnet ist.

## Revendications

1. Ensemble (10) obturateur de grille comprenant un cadre (20) de grille ayant une ouverture (25) et au moins une lamelle (30) s'étendant dans au moins une partie de l'ouverture (25), la lamelle (30) étant montée mobile par rapport à l'ouverture (25) du cadre (20) de grille entre une position ouverte et une position fermée, la lamelle (30) comprenant une première extrémité (31) et une deuxième extrémité (32), une cheville (33) de montage est disposée à la première extrémité (31),
**caractérisé en ce qu'**un bras (34) en forme de C est disposé à la deuxième extrémité (32) et **en ce que** la cheville (33) de montage est fixée de manière amovible au cadre (20) de la grille sur un premier côté (21) du cadre (20) de la grille et le bras (34) en forme de C est fixé de manière amovible au moyen d'une tringle (40) d'accouplement au cadre (20) de la grille sur un premier côté (22) du cadre (20) de la grille, le premier côté (21) et le deuxième côté (22) étant deux côtés opposés du cadre (20) de la grille.

2. Ensemble obturateur de grille suivant la revendication 1, dans lequel l'ensemble (10) obturateur de grille comprend une pluralité de lamelles (30).

3. Ensemble obturateur de grille suivant la revendication 2, dans lequel la pluralité de lamelles (30) est accouplée par une barre (62) d'accouplement pour déplacer simultanément les lamelles (30).

4. Ensemble obturateur de grille suivant l'une des revendications précédentes, dans lequel la cheville (33) de montage est placée dans un trou (26) disposée dans le premier côté (21) du cadre (20) de la grille.

5. Ensemble obturateur de grille suivant l'une des revendications précédentes, dans lequel la tringle (40) d'accouplement comprend une ouverture (41) de réception et une saillie (42) étant formée pour être placée dans l'ouverture (41) de réception.

6. Ensemble obturateur de grille suivant la revendication 5, dans lequel la saillie (42) est d'une forme cylindrique ou d'une forme sphérique ou en forme de champignon.

7. Ensemble obturateur de grille suivant la revendication 5 ou 6, dans lequel l'ouverture (41) de réception est disposée sur le bras (34) en forme de C et la saillie (42) est disposée sur le deuxième côté (22) du cadre (20) de la grille.

8. Ensemble obturateur de grille suivant la revendication 7, dans lequel la saillie (42) est disposée d'un côté (22a) du deuxième côté (22) faisant face, en en étant loin, à l'ouverture (25) du cadre (20) de la grille.

9. Ensemble obturateur de grille suivant l'une des revendications précédentes, dans lequel la tringle (40) d'accouplement comprend un ensemble (50) de verrouillage.

10. Ensemble obturateur de grille suivant la revendication 9, dans lequel l'ensemble (50) de verrouillage comprend une saillie (51) de verrouillage, la saillie (51) de verrouillage étant disposée soit dans l'ouverture (41) de réception soit sur la saillie (42).

11. Ensemble obturateur de grille suivant la revendication 9 ou 10, dans lequel l'ensemble (50) de verrouillage comprend un trou (52) d'encliquetage, le trou (52) d'encliquetage étant disposé soit à ou dans l'ouverture (41) de réception soit dans la saillie (42).
